# EUROPEAN PATENT SPECIFICATION

(11) **EP 3 615 875 B1**
(45) Date of publication and mention of the grant of the patent: **07.12.2022**
(21) Application number: 18728957.4
(22) Date of filing: 26.04.2018
(51) Int. Cl.: F27B 9/20, F27B 9/30

(54) **KILN AND METHOD FOR FIRING OF BASIC CERAMIC ARTICLES**
OFEN UND VERFAHREN ZUM BRENNEN VON BASISCHEN KERAMISCHEN ARTIKELN
FOUR ET PROCÉDÉ DE CUISSON D'ARTICLES CÉRAMIQUES DE BASE

(30) Priority: 26.04.2017 IT 201700045246
(43) Date of publication of application: 04.03.2020
(73) Proprietor: Sacmi Cooperativa Meccanici Imola Societa' Cooperativa, 40026 Imola (IT)
(72) Inventor: VACCARI, Pier Francesco, 40026 Imola (IT); RICCI, Claudio, 40026 Imola (IT); ACERBI, Pierugo, 40026 Imola (IT)
(74) Representative: Mangini, Simone
(86) International application number: PCT/IB2018/052902
(87) International publication number: WO 2018/198064

(56) References cited:
- WO-A1-2010/012636

## Description

### PRIORITY CLAIM

This application claims priority from Italian Patent Application No. 102017000045246 filed on April 26, 2017.

### TECHNICAL FIELD

The present invention relates to a kiln and a method for firing basic ceramic articles. The present invention furthermore relates to a plant and a method for the production of ceramic articles.

### CONTEXT OF THE INVENTION

In the field of the production of ceramic articles, for example ceramic tiles and flagstones, plants are used provided with pressing equipment, in which basic ceramic articles are obtained starting from a semi-dry mixture (typically the humidity varies from 5% to 7%); a decoration device, which decorates the basic ceramic articles; and a sintering kiln in which the basic ceramic articles are fired at a high temperature so as to obtain first treated articles and then the final ceramic products.

Some sintering kilns of the known type, e.g. as described in WO2010/012636 A1, comprise a tunnel and a conveying device to convey the basic ceramic articles along a given path through the tunnel. The tunnel comprises a preheating chamber, a firing chamber and a cooling chamber.

Each of these kilns also comprises a heating device for heating the basic ceramic articles during conveying of the basic ceramic articles through the firing chamber so as to obtain treated ceramic articles. The kiln also comprises a cooling device adapted to cool the treated ceramic articles during conveying through the cooling chamber; and a gas extraction device, which is adapted to extract the gases present in the tunnel at a respective extraction station typically positioned at an entrance of the tunnel.

Operation of the extraction device causes a flow of the gases present in the tunnel. The hot gases move from the firing chamber towards the extraction station.

In some cases, the decoration device is adapted to decorate an upper surface of the basic ceramic articles (articles pressed, but not fired) by means of inkjet digital printing. In these cases, the inks used comprise pigments, conductive polar fluids (like water) and apolar solvents (organic solvents; oils or other hydrocarbons).

The decoration device can furthermore be adapted to also apply an enamel undercoat on the basic ceramic articles (on which the decoration is provided) which, in some cases, comprises further apolar carriers (hydrocarbons). In use, the decoration device applies 10 g/m² to 20 g/m² of decorative ink and 80 g/m² to 150 g/m² of enamel on the surface of the manufactured ceramic articles.

This important quantity of apolar solvents (organic solvents) evaporates from the basic ceramic articles that pass through the kiln, and is partially subjected to cracking and reforming, recombining into new chemical compounds (usually smaller molecules), partly combusted and partly entrained by the gas flow towards the extraction station. However, the compounds not completely oxidized are undesired and require further treatments to prevent them reaching the external environment. These not completely oxidized chemical compounds are often characterised by a strong odour and could also be irritant or even toxic.

A treatment commonly used to reduce these problems is post-combustion of the gases collected by means of a post-combustor of the kiln.

However, these post-combustors have to process a large quantity of gases produced. Therefore, said post-combustors are bulky and costly and entail evident plant costs and costs for operation (energy) and maintenance.

The object of the present invention is to provide a kiln and a method for firing basic ceramic articles and a plant and a method for producing ceramic products which overcome, at least partially, the drawbacks of the known art and are, at the same time, easy and inexpensive to produce.

### SUMMARY

According to the present invention a kiln, a method and a plant are provided according to the following independent claims and, advantageously, according to any one of the claims depending directly or indirectly on the independent claims.

### BRIEF DESCRIPTION OF THE FIGURES

The present invention will now be described with reference to the accompanying drawings, which illustrate non-limiting implementation examples thereof, in which:
- figure 1A is a schematic lateral view of a plant in accordance with the present invention;
- figure 1B schematically illustrates the temperatures in various areas of the kiln of the plant of figure 1A;
- figure 1C schematically illustrates the pressures in various areas of the kiln of the plant of figure 1A;
- figure 2A is a schematic and lateral view of a further implementation of the plant in accordance with the present invention;
- figure 2B schematically illustrates the temperatures in various areas of the kiln of the plant of figure 2A; and
- figure 2C schematically illustrates the pressures in various areas of the kiln of the plant of figure 2A.

### DETAILED DISCLOSURE

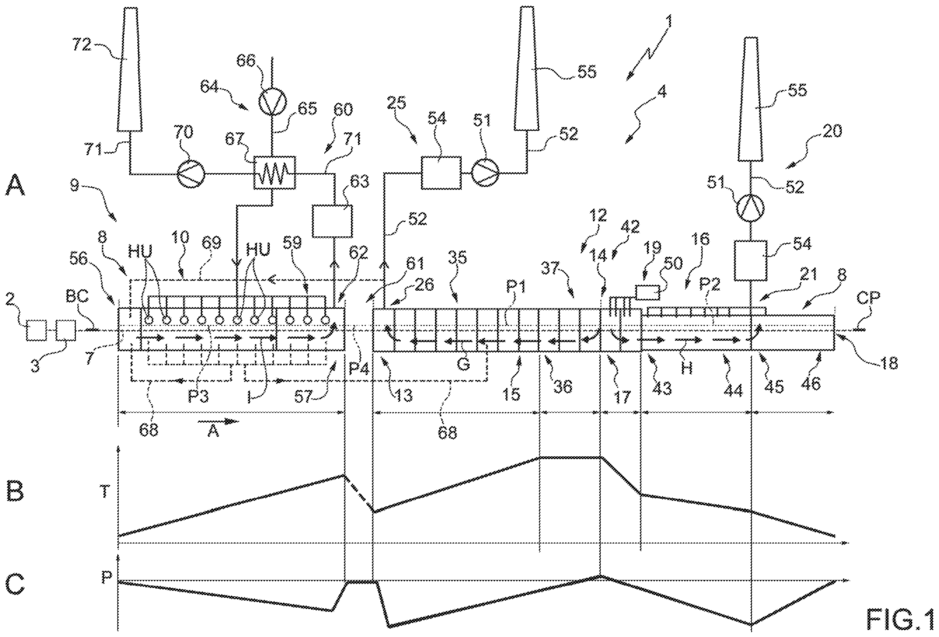

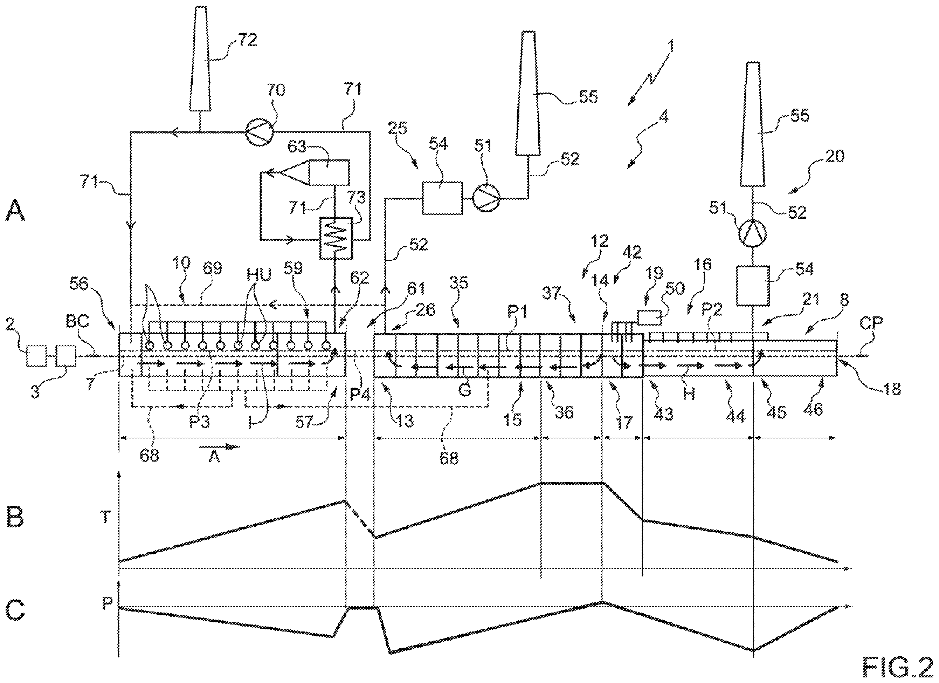

In figures 1A and 2A, the number 1 indicates overall a plant for the production of ceramic products CP, such as ceramic tiles or flagstones. In particular, the plant 1 is adapted to obtain basic ceramic articles BC from a semi-dry mixture; and ceramic products CP by means of thermal treatment of the basic ceramic articles BC, in particular by means of heating and subsequent cooling of the basic ceramic articles BC.

According to some non-limiting embodiments, the plant 1 comprises a pressing apparatus 2 (known per se and not further described herein) adapted to obtain basic ceramic articles BC (known per se) by pressing of a ceramic powder (a semi-dry mixture, in particular having a humidity varying between 5% and 7%) .

The plant 1 comprises a decoration device 3, which is adapted to apply a decoration on the basic ceramic articles BC, in particular on a surface (upper) of the basic ceramic articles BC; and a kiln 4 (in particular, a tunnel kiln) for firing the basic ceramic articles BC so as to obtain (at the end of cooling) the final ceramic articles CP.

According to some non-limiting embodiments, the plant 1 also comprises a drying station (known per se and not illustrated) arranged between the pressing apparatus 2 and the decoration device 3.

In particular, the basic ceramic articles BC comprise ceramic powder.

In particular, the plant 1 further comprises a conveying assembly adapted to convey the basic ceramic articles BC from the apparatus 2 through the device 3 and through at least one portion of the kiln 4.

Advantageously but not necessarily, the device 3 comprises at least one ink-jet head (known per se and not illustrated) which is adapted to emit one or more ink jets towards the basic ceramic articles BC, in particular on the surface (upper) of the basic ceramic articles BC, during the conveying thereof through the device 3. Preferably, the device 3 is also adapted to apply, in particular before application of the ink, a base enamel on the basic ceramic articles BC, in particular on the surface (upper) of the basic ceramic articles BC.

In particular, the ink comprises solid particles (inorganic pigments; e.g. mixtures of oxides of metal chromophores), conductive polar fluids (for example water) and apolar solvents (organic solvents; for example, oils or other hydrocarbons). The base enamel has further apolar components (in particular, hydrocarbons).

In particular, the device 3 is adapted to apply 10 g/m² to 20 g/m² of ink and 80 g/m² to 150 g/m² of base enamel on the surface (upper) of the basic ceramic articles BC.

More in particular, in use, 55% to 65% of liquid components and 35% to 45% of solid components are applied on the surface (upper) of the basic ceramic articles BC.

Therefore, the basic ceramic articles BC decorated, in use, by the device 3, comprise organic compounds, in particular hydrocarbons (in a non-negligible quantity).

The kiln 4 comprises a conveying device 7 (in particular, a roller conveyor; more in particular, having a roller surface) to convey the basic ceramic articles BC along a given path (in a feeding direction A). In particular, the device 7 is part of the above-mentioned conveying assembly. The device 7 is schematically illustrated by a broken line.

In particular, the kiln 4 (tunnel kiln and) has a firing channel 8 which extends along the given path. More precisely, the conveying device 7 extends at least partially into the firing channel 8 to convey the basic ceramic articles BC through said firing channel 8.

The kiln 4 (more precisely, the firing channel 8) comprises at least one firing chamber 12 arranged along the given path and having an input station 13 and an output station 14; in particular, the device 7 is adapted to convey the basic ceramic articles BC along a first portion P1 of the given path (which extends) from the station 13 to the station 14.

The kiln 4 further comprises at least one heating device 15 (only partially illustrated in figures 1A and 2A) adapted to heat the basic ceramic articles BC (from an initial temperature to a firing temperature) generating, in particular maintaining (during the conveying thereof along the portion PI), a temperature of at least 900°C, in particular at least 1000°C, in at least one firing area 37 (through which the path P1 extends at least partially) of the firing chamber 12.

In particular, unless specified to the contrary, when talking about temperature of a chamber and/or of an area of a chamber, we mean the temperature inside said chamber and/or area measured for example with an appropriate sensor (for example a thermocouple) and not a temperature of the basic ceramic articles BC and ceramic products CP.

The kiln 4 further comprises a pre-treatment chamber 9 arranged upstream of the firing chamber 12 (downstream of the decoration device 3) along the given path and at least one heating assembly 10 to heat basic ceramic articles (BC) comprising organic compounds (decorated), in particular so as to cause the organic compounds to at least partly evaporate and at least partly oxidize (more in particular, so as to cause at least the majority of the organic compounds to evaporate and oxidize).

Advantageously but not necessarily, the kiln 4 (more precisely, the firing channel 8) further comprises at least one cooling chamber 16 arranged downstream of the chamber 12 along the given path and having an input station 17 and an output station 18; the conveying device 7 is adapted to convey the basic ceramic articles BC along a portion P2 of the given path from the station 17 to the station 18. In particular, the kiln 4 comprises at least one cooling device 19 adapted to reduce the temperature of the basic ceramic articles BC during conveying along the portion P2 (so as to obtain the ceramic products CP).

Advantageously but not necessarily, the kiln 4 further comprises at least one gas extraction device 20 adapted to extract gas present in the cooling chamber 16 from said chamber 16 at a respective extraction station 21, which is in particular (interposed between the station 17 and the station 18 and) adapted to direct (convey) the gas extracted towards (to) an external environment.

Advantageously but not necessarily, the firing chamber 12 and the cooling chamber 16 are connected (without interruption), in particular directly (i.e. without the interposition of further chambers and/or areas). In other words, the firing channel 8, comprising the firing chamber 12 and the cooling chamber 16, extends without interruption along the paths P1 and P2 from the input station 13 to the output station 18. The output station 14 and the input station 17 are adjacent and, more precisely, coincide.

According to some non-limiting embodiments, the kiln 4 comprises a gas extraction device 25 configured to extract gas from the firing chamber 12 at an extraction station 26, which is interposed between the station 13 and the station 14, and, in particular, to direct (convey) the extracted gas towards (to) an external environment.

Advantageously but not necessarily, the extraction station 26 is arranged at (in particular, coincides with) the input station 13.

More precisely, the firing chamber 12 comprises a pre-firing area 35 extending from the input station 13 to an intermediate station 36 of the chamber 12, said station 36 being interposed between the station 13 and the station 14; and the firing area 37 extending from the station 36 to the output station 14.

According to some embodiments, the heating device 15 comprises burners (of a type known per se and not illustrated herein), each of which, in particular, is adapted to emit a free flame inside the firing channel 8. More in particular, the device 15 comprises burners arranged in the firing chamber 12.

More precisely, the burners are housed in a lateral wall, even more precisely above and below the above-mentioned given path (even more precisely, above and below the roller surface of the device 7).

According to some non-limiting embodiments, the heating device 15 is adapted to increase (gradually) the temperature of the basic ceramic articles BC during conveying cf said basic ceramic articles BC from the input station 13 to the intermediate station 36. In particular, the device 15 is adapted to create a temperature gradient in the pre-firing area 35 (see figures 1B and 2B). More in particular, the device 15 is adapted to create a gradient (an increase) in temperature (in the direction A) from the input station 13 to the output station 14 (at the intermediate station 36); even more in particular, with respective temperatures lower at the input station 13 and respective temperatures higher in the output station 14.

More precisely, the device 15 is adapted to maintain in the area 35 the temperature increasing in the direction A.

Even more precisely, in use, the temperatures are between 200°C and 400°C at the station 13 and between 1000°C and 1300°C at the station 36.

Advantageously but not necessarily, the device 15 is adapted to maintain the temperature in the firing area 37 substantially constant (see figures 1B and 2B) in the feeding direction A. In particular, the heating device 15 is adapted to generate (maintain) a temperature of at least 1000°C (in particular, up to 1300°C) in the area 37.

More precisely, the cooling chamber 16 comprises a rapid cooling area 42 extending from the input station 17 to a final rapid cooling station 43, interposed between the station 17 and the output station 18. In particular, the area 42 is directly adjacent (without interruption) to (is immediately downstream of the) the firing chamber 12, more in particular directly adjacent (i.e. without the interposition of further areas and/or chambers) to the output station 14.

Advantageously but not necessarily, the chamber 16 also comprises an indirect cooling area 44 arranged downstream of the area 42 along the given path.

Advantageously but not necessarily, the chamber 16 also comprises a final cooling area 46 arranged downstream of the area 42 (more precisely, downstream of the indirect cooling area 44) along the given path.

More precisely, the cooling device 19 is adapted to determine a temperature gradient (decreasing in the direction A) in the area 42. In particular, the temperature varies from approximately 1000°C-1300°C at the station 17 to approximately 500°C-700°C at the station 43.

According to some non-limiting embodiments, the cooling device 19 is further adapted to determine a temperature gradient (decreasing in the direction A) in the area 44. In particular, the temperature varies from approximately 500°C to 700°C at the station 43 to approximately 350°C-450°C at a station 45 (arranged upstream of the output station 18).

According to some non-limiting embodiments, the cooling device 19 is furthermore adapted to determine a temperature gradient (decreasing in direction A) in the area 46 so that the temperature at the station 18 is between 80°C and 120°C.

More precisely, the cooling device 19 comprises a cooling assembly 50, which is fluidically connected at the area 42 and is adapted to direct (introduce) a cooling fluid, in particular air (cold), into the chamber 16 (on the basic ceramic articles BC). In this way the temperature gradient is obtained in the area 42.

Advantageously but not necessarily, the device 19 comprises a further cooling assembly adapted to cool the basic ceramic articles BC in an indirect manner (with micro-blowers or heat dissipation tubes) during feeding thereof in the area 44.

According to some non-limiting embodiments, the device 19 also comprises a further cooling assembly to cool the basic ceramic articles BC in an indirect manner (with one or more blowers) during feeding thereof in the area 46.

Advantageously but not necessarily, the extraction device 25 is adapted to generate a gas flow G at least from the output station 14 to the extraction station 26 (and therefore to the input station 13).

In particular, the gas present in the firing chamber 12 comprises fumes resulting from the operation of the burners of the device 15 (in other words, the fumes resulting from combustion of the combustible gases).

In particular, the device 25 comprises a suction unit 51, in particular a fan, fluidically connected to the firing chamber 12 at the station 26 and adapted to generate the flow G, in particular by means of suction.

According to some non-limiting embodiments, the device 25 also comprises a duct 52, which is connected to the chamber 12 at the extraction station 26 and is adapted to direct the gas extracted from the chamber 12 towards the external environment. More in particular, the duct 52 is fluidically connected with the inside of the firing chamber 12 by means of at least one opening in a wall of the firing chamber 12 (in particular, in an upper wall and/or in a base wall of the firing chamber 12).

Advantageously but not necessarily, the suction unit 51 is arranged along the duct 52.

Advantageously but not necessarily, the device 25 also comprises a filtering unit 54 (known per se) adapted to filter the gas extracted from the firing chamber 12. In particular, the unit 54 is connected to the (more precisely, is arranged along the) duct 52 (between the chamber 12 and the suction unit 51).

According to some non-limiting embodiments, the device 25 also comprises an outlet flue 55 fluidically connected to the duct 52 to direct the gas towards the external environment (to the external environment).

The extraction device 20 is similar to the device 25 and therefore only the differences relative to said device 25 are described below, indicating with the same reference numbers parts which are equal or equivalent to parts already described for the device 25.

In particular, the device 20 is adapted to generate at least a gas flow H from the input station 17 to the extraction station 21. More in particular, the flow H has a direction opposite to the direction of the flow G.

According to some non-limiting embodiments, the kiln 4 also comprises a control unit (not illustrated) adapted to control the operation of said kiln 4.

The pre-treatment chamber 9 has an input station 56 and an output station 57. The conveying device 7 is adapted to convey the basic ceramic articles BC comprising organic compounds along a second portion P3 of the given path, said portion P3 extending from the station 56 to the station 57.

The kiln 4 further comprises at least the heating assembly 10, which is adapted to heat the basic ceramic articles generating (maintaining) a temperature of at least 400°C, in particular at least 600°C, even more in particular at least 800°C (more precisely, up to 900°C), in at least one thermal treatment area 59 of the pre-treatment chamber 9 (the second portion P3 of the given path extends through the thermal treatment area 59), in particular so as to cause the organic compounds to at least partly evaporate and at least partly oxidise (more specifically, so as to cause at least the majority of the organic compounds to at least partly evaporate and at least partly oxidize).

In this regard, it should be noted that inside the pre-treatment chamber 9 there is a quantity of oxygen sufficient to allow the oxidization of the organic compounds. In particular, the oxygen enters the chamber 9 mainly through the input station 56.

More precisely, the heating assembly 10 is adapted to heat the basic ceramic articles BC during conveying cf said basic ceramic articles BC through the thermal treatment area 59 (along the portion P3 of the given path).

Advantageously but not necessarily, the heating assembly 10 is adapted to cause the organic compounds to evaporate (completely) and to oxidize (completely).

The kiln 4 further comprises at least one extraction assembly 60 for extracting gas, in particular the evaporated and at least partly oxidized organic compounds, from the pre-treatment chamber 9 (and direct them to the external environment); and an open area 61, which is open relative to the external environment, and is arranged along the given path. In particular, the open area 61 extends between the output station 57 and the input station 13. In particular, in the open area 61 the pressure is the atmospheric pressure, more in particular it is substantially 1 atm (approximately 101325 Pa).

In other words, the input station 13 and the output station 57 are spaced from each other and the open portion 61 is interposed between them.

In particular, the open area 61 is not provided with structural elements that allow a pressure different from the pressure of the external environment (surrounding the kiln 4) to be obtained inside said area, in particular a pressure different from the atmospheric pressure (i.e. approximately 1 atm or approximately 101325 Pa). In other words, the open area 61 is configured in order to prevent a pressure different from the pressure of the external environment (surrounding the kiln 4) to be obtained inside said area, in particular a pressure different from the atmospheric pressure. More in particular, the open area 61 is configured to prevent the depression present in at least one part of the firing chamber 12 and/or of the pre-treatment chamber 9 to extend inside it.

According to some non-limiting embodiments, the open area 61 is provided with at least one opening (upper) configured to allow the free passage of gas between the inside of the open area 61 and the outside. In particular, the open area 61 is without at least one part of the upper wall (more in particular, it is without the upper wall).

In particular (figures 1C and 2C), the kiln 4 is configured to obtain a pressure inside at least one area (in particular, in the extraction station 62) of the pre-treatment chamber 9 and a pressure inside at least one area (in particular, in the extraction station 26) of the firing chamber 12 lower than the pressure in the open area 61. More precisely but not necessarily, the pre-treatment chamber 9, the firing chamber 12, the extraction assembly 60 and the extraction device 20 are configured to obtain a pressure inside at least one area (in particular, in the extraction station 62) of the pre-treatment chamber 9 and a pressure inside at least one area (in particular, in the extraction station 26) of the firing chamber 12 lower than the pressure in the open area 61.

More in particular, the kiln 4 is configured to obtain a pressure increase from (at least) one area (in particular, the extraction station 62) of the pre-treatment chamber 9 to the open area 61 (in the direction A) and a pressure reduction from the open area 61 to (at least) an area (in particular, the extraction station 26) of the firing chamber 12 (in the direction A). More precisely but not necessarily, the pre-treatment chamber 9, the firing chamber 12, the extraction assembly 60, the extraction device 25 and the open area 61 are configured to obtain a pressure increase from (at least) one area (in particular, the extraction station 62) of the pre-treatment chamber 9 to the open area 61 and a pressure reduction from the open area 61 to (at least) an area (in particular, the extraction station 26) of the firing chamber 12.

It should be noted that the firing channel 8 comprises (in addition to the firing chamber 12) also the pre-treatment chamber 9 and is provided with at least one wall that delimits it (above, below and laterally) in respect to the outside. The open area 61 is a discontinuity (interruption) of the firing channel 8. In particular, the firing channel 8 is fluidically connected to the external environment only via the extraction devices 20 and 25, the extraction assembly 60, and the stations 13, 14, 56 and 57.

The conveying device 7 is adapted to convey the basic ceramic articles BC along a portion P4 of the given path from the output station 57 to the input station 13 (in particular, at least partially through the open area 61).

In particular, the extraction assembly 60 is adapted to extract gas (in particular the evaporated and at least partly oxidized organic compounds) from the pre-treatment chamber 9 at an extraction station 62.

Advantageously but not necessarily, the extraction station 62 is arranged at or downstream (in the direction A) of the thermal treatment area 59. Alternatively or in addition, the extraction station 62 (which is arranged along the portion P3) is positioned at the output station 57.

According to some non-limiting embodiments, the heating assembly 10 is adapted to generate (maintain) an increasing temperature in the pre-treatment chamber 9 in the feeding direction A of the basic ceramic articles BC (along the given path) .

According to some non-limiting embodiments, the extraction assembly 60 is adapted to create a gas flow I from the input station 56 to the extraction station 62. In particular, the flow I is in the feeding direction A.

Advantageously but not necessarily, the extraction assembly 60 comprises a combustor 63, which is adapted to oxidize the (at least part of the) gas extracted from the pre-treatment chamber 9. More precisely, the combustor 63 is adapted to oxidize at least the majority (preferably, all) of the organic compounds not oxidized by the heating assembly 10 and extracted by the pre-treatment chamber 9. In particular, the combustor 63 is arranged on the outside of the pre-treatment chamber 9.

Typically, the heating assembly 10 is able to oxidize the majority of the evaporated organic compounds. The combustor 63 (which, if present, has small dimensions as it has to treat a relatively limited quantity of gas) reduces the risk of non-completely oxidized organic compounds being released into the external environment. The combustor 63 is particularly advantageous when the heating assembly 10 and/or the pre-treatment chamber 9 are structured so as not to allow complete oxidization of the organic compounds.

In particular, the extraction assembly 60 comprises a suction unit 70 (in particular a fan) fluidically connected to the pre-treatment chamber 9 at the extraction station 62 and adapted to generate the flow I, in particular by means of suction.

According to some non-limiting embodiments, the extraction assembly 60 also comprises a duct 71, which is connected to the chamber 9 at the extraction station 62 and is adapted to direct the gas extracted from the chamber 9 towards the external environment. More specifically, the duct 71 is fluidically connected to the inside of the pre-treatment chamber 9 by means of at least one opening in a wall of said chamber 9 (in particular, in an upper wall and/or in a base wall of the chamber 9).

Advantageously but not necessarily, the suction unit 70 is arranged along the duct 71 (in particular downstream of the combustor 63).

According to some non-limiting embodiments, the extraction assembly 60 also comprises an outlet flue 72 fluidically connected to the duct 71 to direct the gas towards the external environment (to the external environment).

Advantageously but not necessarily (with particular reference to figure 1A), the kiln 4 comprises at least one heat exchanger 64, which is adapted to interact with the extraction assembly 60 to recover thermal energy (heat) from the gas extracted from the pre-treatment chamber 9. The heat exchanger 64 is adapted to transfer the thermal energy recovered to the pre-treatment chamber 9 and/or to the heating assembly 10.

This allows an overall energy saving to be obtained during operation of the kiln 4.

More in particular, the heat exchanger 64 is adapted to reduce the temperature of the gas extracted from the extraction assembly 60 and heat a gas flow, in particular an air flow.

The heat exchanger 64 is further adapted to introduce the heated gas (air) flow into the chamber 9 and/or into the burners of the assembly 10.

More specifically, in the embodiment illustrated in figure 1A, the heat exchanger 64 comprises at least one main duct 65, through which the gas flow is conveyed, in particular the air flow; a fan 66 to create the gas flow; and a thermal exchange element 67 adapted to extract the heat from the gas coming from the extraction assembly 60 and transfer the heat into the gas flow.

Advantageously but not necessarily (figures 1A and 2A), the heating assembly 10 is adapted to transfer heat mainly to an upward facing surface of each basic ceramic article BC (in respect to the other parts - for example a downward facing surface - of each basic ceramic article BC).

According to some non-limiting embodiments, the heating assembly 10 comprises at least one heating unit HU (known per se and schematically illustrated), in particular chosen from the group consisting of: free flame burner, tube radiant heater (e.g. tube radiant heater with holes and/or radiant heater with built-in heat exchanger), electric resistor, infrared radiation source, laser radiation source, microwave source, radiofrequency source and a combination thereof. In particular, the heating unit HU is arranged inside the pre-treatment chamber 9. According to specific non-limiting embodiments, the heating unit HU is chosen from the group consisting of: free flame burner, tube radiant heater and a combination thereof.

Advantageously but not necessarily, the heating assembly 10 comprises a plurality of heating units HU as defined above.

An example of a heating unit HU of the radiant tube type with holes is disclosed in the patent ES2193829B1 of the same applicant. An example of a heating unit HU of the radiation type with built-in heat exchanger is disclosed in WO2015/015263.

Advantageously but not necessarily, the heating unit/s HU is/are arranged (in the chamber 9) above the conveying device 7 (more precisely, above the roller surface). In particular, the heating unit/s HU is/are adapted to transfer heat mainly to an upward facing surface of each basic ceramic article BC (in respect to other parts - for example a downward facing surface - of each basic ceramic article BC).

According to some non-limiting embodiments, the heating assembly 10 comprises at least one tube radiant heater (in particular, radiant heater with built-in heat exchanger).

Advantageously but not necessarily, the kiln 4 comprises a transfer device 68 adapted to convey at least part of the hot fumes from the heating unit HU (in particular, from the tube radiant heater) to the pre-treatment chamber 9 (in particular, at the input station 56) and/or to the firing chamber 12 (in particular, in the pre-firing area 35).

This allows an overall energy saving to be obtained during operation of the kiln 4.

Advantageously but not necessarily, the kiln 4 comprises a transfer unit 69 to convey (at least) part of the gas present in the firing chamber 12, in particular in the pre-firing area 35, to the pre-treatment chamber 9 (in particular, in the area of the input station 56).

Again, this measure allows an overall energy saving to be obtained during operation of the kiln 4.

The embodiment illustrated in figures 2A, 2B and 2C is substantially identical to the embodiment illustrated in figures 1A, 1B and 1C and differs from it exclusively due to the structure of the extraction assembly 60.

More precisely, in this case, the duct 71 extends from the extraction station 62 to the input station 56 through the combustor 63.

According to embodiments of this type, it is possible to recover (at least partially) the heat of the gas coming out of the extraction station 62 (and the combustor) through the duct 71. In this regard, it is important to underline that the gas which is reintroduced into the pre-treatment chamber 9 (at the input station 56) has been treated by the combustor 63 and therefore has a further reduced concentration of organic compounds (and a relatively high temperature).

This allows an overall energy saving to be obtained during operation of the kiln 4.

The extraction assembly 60 of some non-limiting embodiments (like the one illustrated in figure 2A) allows part of the gases coming from the extraction station 62 to be discharged to the outside (through the flue 72).

Advantageously but not necessarily, the extraction assembly 60 also comprises a heat exchanger 73 which is adapted to transfer heat from a section of the duct 71 coming out of the combustor 63 to a section of the duct 71 going into the combustor 63.

In actual use, the organic compounds (hydrocarbons, in particular apolar solvents) present in the (on the upper surface of the) basic ceramic articles BC evaporate in the pre-treatment chamber 9. More precisely, the apolar solvents are components of the ink and/or of the base enamel applied on the basic ceramic articles BC.

The (evaporated) organic compounds (then) undergo oxidization. More precisely, a majority portion of the organic compounds (at least 90 percent by weight, even more precisely, at least 95 percent by weight of the organic compounds) is oxidized before extraction from the chamber 9, due to the high temperature in the extraction station 62.

In accordance with a further aspect of the present invention, a method is provided for the production of ceramic products CP (for example ceramic tiles or flagstones). In particular, the ceramic products CP are obtained (from the plant 1) by means of treating the basic ceramic articles BC. More in particular, the basic ceramic articles BC are heated (fired) and then cooled to obtain the ceramic products CP.

More precisely, the production method of the ceramic products CP entails at least one step of preparation of the basic ceramic articles BC, at least one decoration step and at least one treatment step.

In particular, during the preparation step, the basic ceramic articles BC are produced by pressing of a non-compact ceramic material (comprising ceramic powders). More in particular, the preparation step is performed by the apparatus 2.

During the decoration step at least one ink is applied, in particular by the device 3, on the basic ceramic articles BC, in particular on one surface thereof. Advantageously but not necessarily, during the decoration step a base enamel is also applied, in particular by the device 3, on the basic ceramic articles BC, in particular on the surface thereof. More in particular, the base enamel is applied prior to application of the ink.

The pre-treatment step entails firing of the basic ceramic articles BC, in particular in the kiln 4, subsequent cooling of which produces the ceramic products CP.

The method also entails at least one transport step, during which the basic ceramic articles BC are conveyed from the decoration device 3 to the kiln 4. More precisely, during the transport step, the basic ceramic articles BC are conveyed from the pressing apparatus 2 to the kiln 4 (through the decoration device 3).

In accordance with a further aspect of the present invention, a firing method of the basic ceramic articles BC is also provided. In particular, said method corresponds to the (is the) treatment step.

The firing method of the basic ceramic articles BC comprises: at least one conveying step (subsequent to the transport step), during which the basic ceramic articles (BC) are conveyed along a given path; at least one first heating step (at least partially simultaneous with the conveying step), during which the basic ceramic articles BC are heated while they are in (conveyed through - also intermittently) a firing area 37 of at least one firing chamber 12, at (along) a first portion P1 of the given path extending from a first input station 13 to a first output station 14; during the first heating step, the firing area 37 has a temperature of at least 900°C, in particular at least 1000°C, more in particular up to 1300°C.

The method further comprises at least one second heating step (in particular, at least partially prior to the first heating step; more in particular, at least partially simultaneous to the conveying step), during which the basic ceramic articles BC comprising organic compounds are heated while they are in (conveyed through - also intermittently) a thermal treatment area 59 of the at least one pre-treatment chamber 9, at (along) a portion P3 of the given path, said portion P3 being arranged upstream of the portion P1 and extending from an input station 56 to a second output station 57 of the pre-treatment chamber 9. The thermal treatment area 59 has a temperature of at least 400°C, in particular at least 600°C, even more in particular at least 800°C, in particular so as to cause the organic components to at least partly evaporate and at least partly oxidise (in particular, at least a majority of the organic compounds).

The method further comprises at least one extraction step (in particular, at least partially simultaneous and/or subsequent to the second heating step), during which gas present in the pre-treatment chamber (in particular, at least part of the organic compounds evaporated and at least partly oxidized) is extracted from the pre-treatment chamber (and directed towards the outside).

During the conveying step, the basic ceramic articles BC are also conveyed along a third portion P4 of the given path (in particular, from the output station 57 to the input station 13) through an open area 61, which is open in respect to the external environment (and at which the pressure is the atmospheric pressure, in particular substantially 1 atm - 101325 Pa) and is arranged between the pre-treatment chamber 9 and the firing chamber 12.

Advantageously but not necessarily (figures 1C and 2C), during at least part of the second heating step, the basic ceramic articles BC are (subject) to a pressure lower than the atmospheric pressure (in particular a pressure lower than approximately 1 atm - or approximately 101325 Pa). In particular, during at least part of the second heating step, the basic ceramic articles BC are (subject) to a pressure lower than that to which they are (subject) when they are in the open area 62.

According to some non-limiting embodiments, when the basic ceramic articles BC are inside at least one area (in particular, in the extraction station 62) of the pre-treatment chamber 9, the basic ceramic articles BC are (subject) to a pressure lower than that to which they are (subject) when they are in the open area 62.

Advantageously but not necessarily, during the conveying step (and during the extraction step), while the basic ceramic articles BC are brought from an extraction station 62, at which the gas is extracted from the pre-treatment chamber 9, to the open area 61, the pressure to which the basic ceramic articles BC are (subject) increases.

Advantageously but not necessarily, during at least part of the first heating step, the basic ceramic articles BC are (subject) to a pressure lower than the atmospheric pressure (in particular a pressure lower than approximately 1 atm - or approximately 101325 Pa). In particular, during at least part of the first heating step, the basic ceramic articles BC are (subject) to a pressure lower than that to which they are subject when they are in the open area 62.

According to some non-limiting embodiments, when the basic ceramic articles BC are in at least one area (in particular, in the extraction station 26) of the firing chamber 12, the basic ceramic articles BC are (subject) to a pressure lower than that to which they are (subject) when they are in the open area 62.

Advantageously but not necessarily, during the conveying step, while the basic ceramic articles BC are brought from the open area 61 along (at least) a section of the first portion P1 of the given path (in particular, to an extraction station 26, at which the gas is extracted from the firing chamber 12), the pressure to which the basic ceramic articles BC are (subject) diminishes.

According to some non-limiting embodiments, a pressure inside at least one area (in particular, in the extraction station 62) of the pre-treatment chamber 9 and a pressure inside at least one area (in particular, in the extraction station 26) of the firing chamber 12 are lower than the pressure in the open area 61.

In particular, a pressure gradient (increase) is present from at least one area (in particular, in the extraction station 62) of the pre-treatment chamber 9 to the open area 61. There is also a pressure gradient (reduction) from the open area 61 to an area (in particular, in the extraction station 26) of the firing chamber 12.

According to some non-limiting embodiments, the method also comprises: a conveying step, during which the basic ceramic articles BC are conveyed through at least one cooling chamber 16 along a portion P2 of the given path from an input station 17 to an output station 18 of the cooling chamber 16; a cooling step, during which the temperature of the basic ceramic articles BC is reduced while they are conveyed along the portion P2 of the given path so as to obtain ceramic products CP.

Advantageously but not necessarily, during the extraction step, the gas (the compounds evaporated and at least partially oxidized), in particular present in the treatment chamber 9, is extracted from the pre-treatment chamber 9 after said gas has been in the (passed through the) thermal treatment area 59.

According to some non-limiting embodiments, the gas is extracted from the pre-treatment chamber 9 at an extraction station 62 arranged at or downstream of the thermal treatment area 59.

Advantageously but not necessarily, during the second heating step, the heat is transferred mainly to an upward facing surface of each basic ceramic article BC (in respect to other parts - for example a downward facing surface - of each basic ceramic article BC) .

According to some non-limiting embodiments, during the extraction step, a gas flow I is created from the input station 56 in the feeding direction A of the basic ceramic articles BC along the given path.

Advantageously but not necessarily, the firing method of the basic ceramic articles BC and the method for the production of ceramic products CP are implemented by the kiln 4 and by the plant 1, respectively.

The kiln 4, the plant 1, the method for the production of ceramic products CP and the firing method of basic ceramic articles BC described above (according to the present invention) have various advantages relative to the prior art. In particular, the use of large post-combustors is not necessary. In this regard, it should be noted that the majority of the organic compounds are oxidized at the extraction station 62. This allows a reduction in kiln costs, plant costs and energy costs for operation and maintenance. Unless explicitly indicated otherwise, the content of the references (articles, books, patent applications etc.) mentioned in this text is referred to in full here.

## Claims

1. A kiln for firing basic ceramic articles (BC); the kiln (4) comprises: a conveying device (7) for conveying the basic ceramic articles (BC) along a given path; at least one firing chamber (12), which is arranged along the given path and has a first input station (13) and a first output station (14); and at least one heating device (15), which is adapted to heat the basic ceramic articles (BC) generating a temperature of at least 900°C, in particular at least 1000°C, in at least one firing area (37) of the firing chamber (12); the conveying device (7) is adapted to convey the basic ceramic articles (BC) along a first portion (P1) of the given path from the first input station (13) to the first output station (14);
the kiln (4) being **characterized in that** it comprises at least one pre-treatment chamber (9), which is arranged upstream of the firing chamber (12) along the given path and has a second input station (56) and a second output station (57); the conveying device (7) being adapted to convey the basic ceramic articles (BC) comprising organic compounds along a second portion (P3) of the given path from the second input station (56) to the second output station (57); the kiln (4) comprising, furthermore, at least one heating assembly (10), which is adapted to heat the basic ceramic articles (BC) generating a temperature of at least 600°C, in particular at least 800°C, in at least one thermal treatment area (59) of the pre-treatment chamber (9), in particular so as to cause the organic compounds to at least partly evaporate and at least partially oxidize; at least one extraction assembly (60) to extract gas, in particular the evaporated and at least partially oxidized organic compounds, from the pre-treatment chamber (9); and an open area (61), which is open in respect to the external environment and is arranged along the given path between the pre-treatment chamber (9) and the firing chamber (12);
the second portion (P3) of the given path extending at least partially though the thermal treatment area (59); the conveying device (7) being adapted to convey the basic ceramic articles (BC) along a third portion (P4) of the given path from the second output station (57) to the first input station (13) .

2. The kiln according to Claim 1, wherein the extraction assembly (60) is adapted to extract gas from the pre-treatment chamber (9) at an extraction station (62), which is arranged at or downstream of the thermal treatment area (59); in the open area (61) the pressure is the atmospheric pressure, more in particular substantially 1 atm.

3. The kiln according to any one of the preceding Claims, and configured to obtain a pressure inside at least one area (in particular, in the extraction station (62)) of the pre-treatment chamber (9) and a pressure inside at least one area (in particular, in the extraction station (26)) of the firing chamber (12) lower than the pressure in the open area (61).

4. The kiln according to any one of the preceding Claims, wherein the heating assembly (10) is adapted to generate an increasing temperature in the pre-treatment chamber (9) in a feeding direction (A) of the basic ceramic articles (BC) along the given path; the extraction assembly (60) is adapted to extract gas at an extraction station (62), which is arranged at the second output station (57).

5. The kiln according to any one of the preceding Claims, wherein the extraction assembly (60) is adapted to extract gas at an extraction station (62), which is arranged along the second portion (P3), and to create a gas flow (I) from the second input station (56) to the extraction station (62).

6. The kiln according to any one of the preceding Claims, wherein the extraction assembly (60) comprises a combustor (63), which is adapted to oxidize at least part of the gas, in particular at least the greatest part of the organic compounds not oxidized by the heating assembly (10), extracted from the pre-treatment chamber (9).

7. The kiln according to any one of the preceding Claims, and comprising at least one heat exchanger (64), which is adapted to interact with the extraction assembly (60) so as to recover thermal energy (heat) from the gas extracted from the pre-treatment chamber (9); the heat exchanger (64) is adapted to transfer the recovered thermal energy to the pre-treatment chamber (9) and/or to the heating assembly (10).

8. The kiln according to any one of the preceding Claims, wherein the heating assembly (10) comprises at least one heating unit (HU) chosen in the group consisting of: free flame burner, tube radiant heater, in particular tube radiant heater with holes and/or radiant heater with built-in heat exchanger, electric resistor, infrared radiation source, laser radiation source, microwave source, radio frequency source, and a combination thereof.

9. The kiln according to Claim 8, wherein the heating assembly (10) comprises at least one heating unit (HU), which is arranged above the conveying device (7) and is adapted to mainly transfer heat to an upward facing surface of each basic ceramic article (BC).

10. The kiln according to any one of the preceding Claims, and comprising a transfer unit (69) to convey at least part of the gas present in the firing chamber (12) to the pre-treatment chamber (9) .

11. The kiln according to any one of the preceding Claims, wherein the heating assembly (10) comprises at least one tube radiant heater, in particular radiant heater with built-in heat exchanger; the kiln comprises, furthermore, a transfer device (68), which is adapted to convey at least part of the hot fumes from the heater to the pre-treatment chamber (9) (in particular, at the second input station (56)) and/or to the firing chamber (12).

12. A plant for the production of ceramic products (CP) starting from basic ceramic articles (BC); the plant (1) comprises a decoration unit (3), which is adapted to decorate the basic ceramic articles (BC) with an ink comprising organic compounds, and a kiln (4) according to one of the preceding Claims.

13. A method for firing basic ceramic articles (BC), the method comprises:
at least one conveying step, during which the basic ceramic articles (BC) are conveyed along a given path;
at least one first heating step, during which the basic ceramic articles (BC) are heated while they are in a firing area (37) of a firing chamber (12), at a first portion (P1) of the given path extending through the firing area (37) from a first input station (13) to a first output station (14) of the firing chamber (12); during the first heating step, said firing area (37) having a temperature of at least 900°C, in particular of at least 1000°C;
the method being **characterized in that** it comprises at least one second heating step, during which the basic ceramic articles (BC) comprising organic compounds are heated while they are in a thermal treatment area (59) of a pre-treatment chamber (9), at a second portion (P3) of the given path, said second portion (P3) being arranged upstream of the first portion (P1), and extending through the thermal treatment area (59) from a second input station (56) to a second output station (57) of the pre-treatment chamber (9); during the second heating step, the thermal treatment area (59) has a temperature of at least 600°C, in particular at least 800°C, in particular so as to cause the organic compounds to at least partly evaporate and at least partially oxidize;
the method comprising, furthermore, at least one extraction step, which is at least partially simultaneous and/or subsequent to the second heating step and during which gas present in the pre-treatment chamber (9) is extracted from the pre-treatment chamber (9); and
during the conveying step, the basic ceramic articles (BC) are also conveyed along a third portion (P4) of the given path through an open area (61), which is open relative to the external environment and is arranged between the pre-treatment chamber (9) and the firing chamber (12).

14. The method according to Claim 13, wherein, during the extraction step, the gas present in the pre-treatment chamber (9) is extracted from the pre-treatment chamber (9) after the gas has been in the thermal treatment area (59).

15. The method according to claim 13 or 14, wherein in the open area (61) the pressure is the atmospheric pressure, more in particular it is substantially 1 atm.

16. The method according to any one of the Claims from 13 to 15, wherein, when the basic ceramic articles (BC) are inside at least one area (in particular, in the extraction station (62)) of the pre-treatment chamber (9), the basic ceramic articles (BC) are subject to a pressure lower than the pressure to which they are subject when they are in the open area (62); when the basic ceramic articles (BC) are inside at least one area, in particular in the extraction station (26) of the firing chamber (12), the basic ceramic articles (BC) are subject to a pressure lower than the pressure to which they are subject when they are in the open area (62).

17. The method according to any one of the claims from 13 to 16, wherein during the second heating step, the heat is transferred mainly to an upward facing surface of each basic ceramic article (BC).

18. A method according to any one of the Claims from 13 to 17, wherein, during the extraction step, a gas flow (I) is created from the second input station (56) in the feeding direction (A) of the basic ceramic articles (BC) along the given path.

## Patentansprüche

1. Ofen zum Brennen von keramischen Basisartikeln (BC); wobei der Ofen (4) aufweist: eine Transportvorrichtung (7) zum Transportieren der keramischen Basisartikel (BC) entlang eines gegebenen Pfads; mindestens eine Brennkammer (12), die entlang des gegebenen Pfads angeordnet ist und eine erste Eingabestation (13) und eine erste Ausgabestation (14) hat; und mindestens eine Heizvorrichtung (15), die angepasst ist, die keramischen Basisartikel (BC) zu erhitzen, und eine Temperatur von mindestens 900°C, insbesondere mindestens 1000°C, in mindestens einer Brennzone (37) der Brennkammer (12) erzeugt; wobei die Transportvorrichtung (7) angepasst ist, die keramischen Basisartikel (BC) entlang eines ersten Abschnitts (P1) des gegebenen Pfads von der ersten Eingabestation (13) zu der ersten Ausgabestation (14) zu transportieren;
wobei der Ofen (4) **dadurch gekennzeichnet ist, dass** er mindestens eine Vorbehandlungskammer (9) aufweist, die stromauf der Brennkammer (12) entlang des gegebenen Pfads angeordnet ist und eine zweite Eingabestation (56) und eine zweite Ausgabestation (57) hat; wobei die Transportvorrichtung (7) angepasst ist, die keramischen Basisartikel (BC), die organische Verbindungen aufweisen, entlang eines zweiten Abschnitts (P3) des gegebenen Pfads von der zweiten Eingabestation (56) zu der zweiten Ausgabestation (57) zu transportieren; wobei der Ofen (4) desweiteren aufweist: mindestens eine Heizanordnung (10), die angepasst ist, die keramischen Basisartikel (BC) zu erhitzen, und eine Temperatur von mindestens 600°C, insbesondere mindestens 800°C, in mindestens einer thermischen Behandlungszone (59) der Vorbehandlungskammer (9) erzeugt, insbesondere um zu bewirken, dass die organischen Verbindungen mindestens teilweise verdampfen und mindestens teilweise oxidieren; mindestens eine Extraktionsanordnung (60), um Gas, insbesondere die verdampften und mindestens teilweise oxidierten organischen Verbindungen, aus der Vorbehandlungskammer (9) zu extrahieren; und eine offene Zone (61), die zur äußeren Umgebung hin offen ist und entlang des gegebenen Pfads zwischen der Vorbehandlungskammer (9) und der Brennkammer (12) angeordnet ist;
wobei der zweite Abschnitt (P3) des gegebenen Pfads sich mindestens teilweise durch die thermische Behandlungszone (59) erstreckt; die Transportvorrichtung (7) angepasst ist, die keramischen Basisartikel (BC) entlang eines dritten Abschnitts (P4) des gegebenen Pfads von der zweiten Ausgabestation (57) zu der ersten Eingabestation (13) zu transportieren.

2. Ofen nach Anspruch 1, wobei die Extraktionsanordnung (60) angepasst ist, an einer Extraktionsstation (62), die an oder stromab der thermischen Behandlungszone (59) angeordnet ist, Gas aus der Vorbehandlungskammer (9) zu extrahieren; wobei in der offenen Zone (61) der Druck Atmosphärendruck, spezieller im Wesentlichen 1atm, ist.

3. Ofen nach einem der vorstehenden Ansprüche und konfiguriert, um einen Druck in mindestens einer Zone (insbesondere in der Extraktionsstation (62)) der Vorbehandlungskammer (9) und einen Druck in mindestens einer Zone (insbesondere in der Extraktionsstation (26)) der Brennkammer (12) zu erzielen, der niedriger als der Druck in der offenen Zone (61) ist.

4. Ofen nach einem der vorstehenden Ansprüche, wobei die Heizanordnung (10) angepasst ist, in der Vorbehandlungskammer (9) eine zunehmende Temperatur in einer Zuführungsrichtung (A) der keramischen Basisartikel (BC) entlang des gegebenen Pfads zu erzeugen; wobei die Extraktionsanordnung (60) angepasst ist, an einer Extraktionsstation (62), die an der zweiten Ausgabestation (57) angeordnet ist, Gas zu extrahieren.

5. Ofen nach einem der vorstehenden Ansprüche, wobei die Extraktionsanordnung (60) angepasst ist, an einer Extraktionsstation (62), die entlang des zweiten Abschnitts (P3) angeordnet ist, Gas zu extrahieren und einen Gasstrom (I) von der zweiten Eingabestation (56) zu der Extraktionsstation (62) zu erzeugen.

6. Ofen nach einem der vorstehenden Ansprüche, wobei die Extraktionsanordnung (60) einen Verbrenner (63) aufweist, der angepasst ist, mindestens einen Teil des Gases, insbesondere mindestens den größten Teil der von der Heizanordnung (10) nicht oxidierten, aus der Vorbehandlungskammer (9) extrahierten organischen Verbindungen, zu oxidieren.

7. Ofen nach einem der vorstehenden Ansprüche und aufweisend mindestens einen Wärmetauscher (64), der angepasst ist, mit der Extraktionsanordnung (60) zu interagieren, um so thermische Energie (Wärme) aus dem aus der Vorbehandlungskammer (9) extrahierten Gas zurückzugewinnen; wobei der Wärmetauscher (64) angepasst ist, die zurückgewonnene thermische Energie zu der Vorbehandlungskammer (9) und/oder zu der Heizanordnung (10) zu transferieren.

8. Ofen nach einem der vorstehenden Ansprüche, wobei die Heizanordnung (10) mindestens eine Heizeinheit (HU) aufweist, die aus der folgenden Gruppe ausgewählt ist: Freiflammenbrenner, Röhrenstrahlungsheizer, insbesondere Röhrenstrahlungsheizer mit Löchern und/oder Strahlungsheizer mit eingebautem Wärmetauscher, elektrischer Widerstand, Infrarotstrahlungsquelle, Laserstrahlungsquelle, Mikrowellenquelle, Hochfrequenzquelle und eine Kombination davon.

9. Ofen nach Anspruch 8, wobei die Heizanordnung (10) mindestens eine Heizeinheit (HU) aufweist, die oberhalb der Transportvorrichtung (7) angeordnet ist und angepasst ist, Wärme hauptsächlich auf eine nach oben schauende Oberfläche jedes keramischen Basisartikels (BC) zu übertragen.

10. Ofen nach einem der vorstehenden Ansprüche und aufweisend eine Transfereinheit (69), um mindestens einen Teil des in der Brennkammer (12) vorhandenen Gases zu der Vorbehandlungskammer (9) zu transportieren.

11. Ofen nach einem der vorstehenden Ansprüche, wobei die Heizanordnung (10) mindestens einen Röhrenstrahlungsheizer, insbesondere einen Strahlungsheizer mit eingebautem Wärmetauscher, aufweist; wobei der Ofen desweiteren eine Transfervorrichtung (68) aufweist, die angepasst ist, mindestens einen Teil der heißen Rauchgase aus dem Heizer zu der Vorbehandlungskammer (9) (insbesondere an der zweiten Eingabestation (56)) und/oder zu der Brennkammer (12) zu transportieren.

12. Anlage zur Herstellung von keramischen Produkten (CP) ausgehend von keramischen Basisartikeln (BC); wobei die Anlage (1) eine Dekorationseinheit (3), die angepasst ist, die keramischen Basisartikel (BC) mit einer Tinte, die organische Verbindungen aufweist, zu dekorieren, und einen Ofen (4) nach einem der vorstehenden Ansprüche aufweist.

13. Verfahren zum Brennen von keramischen Basisartikeln (BC), wobei das Verfahren aufweist:
mindestens einen Transportschritt, in dem die keramischen Basisartikel (BC) entlang eines gegebenen Pfads transportiert werden;
mindestens einen ersten Heizschritt, in dem die keramischen Basisartikel (BC) erhitzt werden, während sie in einer Brennzone (37) einer Brennkammer (12) an einem sich durch die Brennzone (37) von einer ersten Eingabestation (13) zu einer ersten Ausgabestation (14) der Brennkammer (12) erstreckenden ersten Abschnitt (P1) des gegebenen Pfads sind; wobei in dem ersten Heizschritt die Brennzone (37) eine Temperatur von mindestens 900°C, insbesondere mindestens 1000°C, hat;
wobei das Verfahren **dadurch gekennzeichnet ist, dass** es mindestens einen zweiten Heizschritt aufweist, in dem die keramischen Basisartikel (BC), die organische Verbindungen aufweisen, erhitzt werden, während sie in einer thermischen Behandlungszone (59) einer Vorbehandlungskammer (9) an einem zweiten Abschnitt (P3) des gegebenen Pfads sind, wobei der zweite Abschnitt (P3) stromauf des ersten Abschnitts (P1) angeordnet ist und sich durch die thermische Behandlungszone (59) von einer zweiten Eingabestation (56) zu einer zweiten Ausgabestation (57) der Vorbehandlungskammer (9) erstreckt; wobei in dem zweiten Heizschritt die thermische Behandlungszone (59) eine Temperatur von mindestens 600°C, insbesondere mindestens 800°C, hat, insbesondere um zu bewirken, dass die organischen Verbindungen mindestens teilweise verdampfen und mindestens teilweise oxidieren;
wobei das Verfahren desweiteren mindestens einen Extraktionsschritt aufweist, der mindestens teilweise gleichzeitig mit und/oder nach dem zweiten Heizschritt ist und in dem Gas, das in der Vorbehandlungskammer (9) vorhanden ist, aus der Vorbehandlungskammer (9) extrahiert wird; und
wobei in dem Transportschritt die keramischen Basisartikel (BC) außerdem entlang eines dritten Abschnitts (P4) des gegebenen Pfads durch eine offene Zone (61) transportiert werden, die zur äußeren Umgebung hin offen ist und zwischen der Vorbehandlungskammer (9) und der Brennkammer (12) angeordnet ist.

14. Verfahren nach Anspruch 13, wobei in dem Extraktionsschritt das in der Vorbehandlungskammer (9) vorhandene Gas aus der Vorbehandlungskammer (9) extrahiert wird, nachdem das Gas in der thermischen Behandlungszone (59) gewesen ist.

15. Verfahren nach Anspruch 13 oder 14, wobei in der offenen Zone (61) der Druck Atmosphärendruck, spezieller im Wesentlichen latm, ist.

16. Verfahren nach einem der Ansprüche 13 bis 15, wobei:
wenn die keramischen Basisartikel (BC) in mindestens einer Zone (insbesondere in der Extraktionsstation (62)) der Vorbehandlungskammer (9) sind, die keramischen Basisartikel (BC) einem Druck ausgesetzt sind, der niedriger ist als der Druck, dem sie ausgesetzt sind, wenn sie in der offenen Zone (62) sind;
wenn die keramischen Basisartikel (BC) in mindestens einer Zone, insbesondere in der Extraktionsstation (26), der Brennkammer (12) sind, die keramischen Basisartikel (BC) einem Druck ausgesetzt sind, der niedriger ist als der Druck, dem sie ausgesetzt sind, wenn sie in der offenen Zone (62) sind.

17. Verfahren nach einem der Ansprüche 13 bis 16, wobei in dem zweiten Heizschritt die Wärme hauptsächlich auf eine nach oben schauende Oberfläche jedes keramischen Basisartikels (BC) übertragen wird.

18. Verfahren nach einem der Ansprüche 13 bis 17, wobei in dem Extraktionsschritt ein Gasstrom (I) aus der zweiten Eingabestation (56) in die Zuführungsrichtung (A) der keramischen Basisartikel (BC) entlang des gegebenen Pfads erzeugt wird.

## Revendications

1. Four pour la cuisson d'articles céramiques de base (BC) ; le four (4) comprend : un dispositif de transport (7) pour le transport des articles céramiques de base (BC) le long d'un chemin donné ; au moins une chambre de cuisson (12), qui est agencée le long du chemin donné et possède une première station d'entrée (13) et une première station de sortie (14) ; et au moins un dispositif de chauffage (15), qui est adapté pour chauffer les articles céramiques de base (BC) en générant une température d'au moins 900 °C, en particulier d'au moins 1000 °C, dans au moins une zone de cuisson (37) de la chambre de cuisson (12) ; le dispositif de transport (7) est adapté pour transporter les articles céramiques de base (BC) le long d'une première portion (P1) du chemin donné de la première station d'entrée (13) à la première station de sortie (14) ;
le four (4) étant **caractérisé en ce qu'**il comprend au moins une chambre de prétraitement (9), qui est agencée en amont de la chambre de cuisson (12) le long du chemin donné et possède une deuxième station d'entrée (56) et une deuxième station de sortie (57) ; le dispositif de transport (7) étant adapté pour transporter les articles céramiques de base (BC) comprenant des composés organiques le long d'une deuxième portion (P3) du chemin donné de la deuxième station d'entrée (56) à la deuxième station de sortie (57) ; le four (4) comprenant, en outre, au moins un ensemble de chauffage (10), qui est adapté pour chauffer les articles céramiques de base (BC) en générant une température d'au moins 600 °C, en particulier d'au moins 800 °C, dans au moins une zone de traitement thermique (59) de la chambre de prétraitement (9), en particulier de façon à amener les composés organiques à au moins partiellement s'évaporer et à au moins partiellement d'oxyder ; au moins un ensemble d'extraction (60) pour extraire un gaz, en particulier les composés organiques évaporés et au moins partiellement oxydés, à partir de la chambre de prétraitement (9) ; et une zone ouverte (61), qui est ouverte par rapport à l'environnement externe et est agencée le long du chemin donné entre la chambre de prétraitement (9) et la chambre de cuisson (12) ;
la deuxième portion (P3) du chemin donné s'étendant au moins partiellement à travers la zone de traitement thermique (59) ; le dispositif de transport (7) étant adapté pour transporter les articles céramiques de base (BC) le long d'une troisième portion (P4) du chemin donné de la deuxième station de sortie (57) à la première station d'entrée (13).

2. Four selon la revendication 1, dans lequel l'ensemble d'extraction (60) est adapté pour extraire un gaz à partir de la chambre de prétraitement (9) au niveau d'une station d'extraction (62), qui est agencée au niveau ou en aval de la zone de traitement thermique (59) ; dans la zone ouverte (61) la pression est la pression atmosphérique, plus particulièrement sensiblement 1 atm.

3. Four selon l'une quelconque des revendications précédentes, et configuré pour obtenir une pression à l'intérieur d'au moins une zone (en particulier, dans la station d'extraction (62)) de la chambre de prétraitement (9) et une pression à l'intérieur d'au moins une zone (en particulier, dans la station d'extraction (26)) de la chambre de cuisson (12) inférieures à la pression dans la zone ouverte (61).

4. Four selon l'une quelconque des revendications précédentes, dans lequel l'ensemble de chauffage (10) est adapté pour générer une température croissante dans la chambre de prétraitement (9) dans une direction d'apport (A) des articles céramiques de base (BC) le long du chemin donné ; l'ensemble d'extraction (60) est adapté pour extraire un gaz au niveau d'une station d'extraction (62), qui est agencée au niveau de la deuxième station de sortie (57).

5. Four selon l'une quelconque des revendications précédentes, dans lequel l'ensemble d'extraction (60) est adapté pour extraire un gaz au niveau d'une station d'extraction (62), qui est agencée le long de la deuxième portion (P3), et pour créer un courant de gaz (I) de la deuxième station d'entrée (56) à la station d'extraction (62) .

6. Four selon l'une quelconque des revendications précédentes, dans lequel l'ensemble d'extraction (60) comprend une chambre de combustion (63), qui est adaptée pour oxyder au moins une partie du gaz, en particulier au moins la plus grande partie des composés organiques non oxydés par l'ensemble de chauffage (10), extrait à partir de la chambre de prétraitement (9).

7. Four selon l'une quelconque des revendications précédentes, et comprenant au moins un échangeur de chaleur (64), qui est adapté pour interagir avec l'ensemble d'extraction (60) de façon à récupérer de l'énergie thermique (chaleur) à partir du gaz extrait à partir de la chambre de prétraitement (9) ; l'échangeur de chaleur (64) est adapté pour transférer l'énergie thermique récupérée à la chambre de prétraitement (9) et/ou à l'ensemble de chauffage (10).

8. Four selon l'une quelconque des revendications précédentes, dans lequel l'ensemble de chauffage (10) comprend au moins une unité de chauffage (HU) choisie parmi le groupe constitué de : un brûleur à flamme libre, un dispositif de chauffage radiant à tubes, en particulier un dispositif de chauffage radiant à tubes ayant des trous et/ou un dispositif de chauffage radiant ayant un échangeur de chaleur intégré, une résistance électrique, une source de rayonnement infrarouge, une source de rayonnement laser, une source de micro-ondes, une source radiofréquence, et une combinaison de ceux-ci.

9. Four selon la revendication 8, dans lequel l'ensemble de chauffage (10) comprend au moins une unité de chauffage (HU), qui est agencée au-dessus du dispositif de transport (7) et est adaptée pour transférer principalement de la chaleur à une surface faisant face vers le haut de chaque article céramique de base (BC).

10. Four selon l'une quelconque des revendications précédentes, et comprenant une unité de transfert (69) pour transporter au moins une partie du gaz présent dans la chambre de cuisson (12) jusqu'à la chambre de prétraitement (9).

11. Four selon l'une quelconque des revendications précédentes, dans lequel l'ensemble de chauffage (10) comprend au moins un dispositif de chauffage radiant à tubes, en particulier un dispositif de chauffage radiant ayant un échangeur de chaleur intégré ; le four comprend, en outre, un dispositif de transfert (68), qui est adapté pour transporter au moins une partie des fumées chaudes, du dispositif de chauffage à la chambre de prétraitement (9) (en particulier, au niveau de la deuxième station d'entrée (56)) et/ou à la chambre de cuisson (12).

12. Installation pour la production de produits céramiques (CP) en partant d'articles céramiques de base (BC) ; l'installation (1) comprend une unité de décoration (3), qui est adaptée pour décorer les articles céramiques de base (BC) avec une encre comprenant des composés organiques, et un four (4) selon l'une des revendications précédentes.

13. Méthode pour la cuisson d'articles céramiques de base (BC), la méthode comprend :
au moins une étape de transport, au cours de laquelle les articles céramiques de base (BC) sont transportés le long d'un chemin donné ;
au moins une première étape de chauffage, au cours de laquelle les articles céramiques de base (BC) sont chauffés tandis qu'ils sont dans une zone de cuisson (37) d'une chambre de cuisson (12), au niveau d'une première portion (P1) du chemin donné s'étendant à travers la zone de cuisson (37), d'une première station d'entrée (13) à une première station de sortie (14) de la chambre de cuisson (12) ; au cours de la première étape de chauffage, ladite zone de cuisson (37) ayant une température d'au moins 900 °C, en particulier d'au moins 1000 °C ;
la méthode étant **caractérisée en ce qu'**elle comprend au moins une deuxième étape de chauffage, au cours de laquelle les articles céramiques de base (BC) comprenant des composés organiques sont chauffés tandis qu'ils sont dans une zone de traitement thermique (59) d'une chambre de prétraitement (9), au niveau d'une deuxième portion (P3) du chemin donné, ladite deuxième portion (P3) étant agencée en amont de la première portion (P1), et s'étendant à travers la zone de traitement thermique (59), d'une deuxième station d'entrée (56) à une deuxième station de sortie (57) de la chambre de prétraitement (9) ; au cours de la deuxième étape de chauffage, la zone de traitement thermique (59) possède une température d'au moins 600 °C, en particulier d'au moins 800 °C, en particulier de façon à amener les composés organiques à au moins partiellement s'évaporer et à au moins partiellement d'oxyder ;
la méthode comprenant, en outre, au moins une étape d'extraction, qui est au moins partiellement simultanée et/ou postérieure à la deuxième étape de chauffage et au cours de laquelle un gaz présent dans la chambre de prétraitement (9) est extrait à partir de la chambre de prétraitement (9) ; et
au cours de l'étape de transport, les articles céramiques de base (BC) sont également transportés long d'une troisième portion (P4) du chemin donné à travers une zone ouverte (61), qui est ouverte par rapport à l'environnement externe et est agencée entre la chambre de prétraitement (9) et la chambre de cuisson (12).

14. Méthode selon la revendication 13, dans laquelle, au cours de l'étape d'extraction, le gaz présent dans la chambre de prétraitement (9) est extrait à partir de la chambre de prétraitement (9) après que le gaz a été dans la zone de traitement thermique (59).

15. Méthode selon la revendication 13 ou 14, dans laquelle dans la zone ouverte (61), la pression est la pression atmosphérique, plus particulièrement elle est sensiblement de 1 atm.

16. Méthode selon l'une quelconque des revendications 13 à 15, dans laquelle, lorsque les articles céramiques de base (BC) sont à l'intérieur d'au moins une zone (en particulier, dans la station d'extraction (62)) de la chambre de prétraitement (9), les articles céramiques de base (BC) sont soumis à une pression inférieure à la pression à laquelle ils sont soumis lorsqu'ils sont dans la zone ouverte (62) ; lorsque les articles céramiques de base (BC) sont à l'intérieur d'au moins une zone, en particulier dans la station d'extraction (26) de la chambre de cuisson (12), les articles céramiques de base (BC) sont soumis à une pression inférieure à la pression à laquelle ils sont soumis lorsqu'ils sont dans la zone ouverte (62).

17. Méthode selon l'une quelconque des revendications 13 à 16, dans laquelle au cours de la deuxième étape de chauffage, la chaleur est transférée principalement à une surface faisant face vers le haut de chaque article céramique de base (BC).

18. Méthode selon l'une quelconque des revendications 13 à 17, dans laquelle, au cours de l'étape d'extraction, un courant de gaz (I) est créé à partir de la deuxième station d'entrée (56) dans la direction d'apport (A) des articles céramiques de base (BC) le long du chemin donné.
